# EUROPEAN PATENT APPLICATION

(11) **EP 1 060 918 A1**
(43) Date of publication of application: **20.12.2000**
(21) Application number: 00401534.3
(22) Date of filing: 31.05.2000
(51) Int. Cl.: B60J 5/04

(54) **Door Module for a vehicle door**

(30) Priority: 04.06.1999 DE 19925522
(71) Applicant: VALEO GmbH & Co Schliesssysteme KG, 42579 Heiligenhaus (DE)
(72) Inventor: Schwab, Dittmar, 63110 Rodgau (DE); Buchta, Cristoph, 71069 Sindelfingen (DE)
(74) Representative: Lenne, Laurence

(57) **Abstract**

The invention relates to a door module for a vehicle door having a window pane, door lock (6) and door outside handle (8), the door module (1) comprising a unit carrier (2) and a plurality of functional elements (3, 4, 6, 7) arranged on the unit carrier (2).

In order, in addition to the door lock, also to arrange the bearing bracket for a door outside handle (8) on the door module (1), the invention proposes not fastening the door lock (6) and the bearing bracket (7) to the unit carrier (2) of the door module (1) directly, but to an essentially U-shaped console (5) which is arranged on the unit carrier (2) and whose first limb (11) is connected fixedly to the unit carrier (2), whose second limb (13) is connected to the bearing bracket (7) of the door outside handle (8), and whose end side (16) which connects the two limbs (11, 13) is connected to the door lock (6), the distance (17) between the two limbs (11, 13) of the console (5) being selected in such a manner that the window pane of the vehicle door can be guided through between them.

## Description

The invention relates to a door module for a vehicle door having a window pane, door lock and door outside handle, the door module comprising a unit carrier and a plurality of functional elements arranged on the unit carrier.

A door module of this type is known, for example, from DE 39 08 995 C2. It comprises a unit carrier to which the door lock is also fastened in addition to lighting elements. The door module is screwed to the door frame as a premanufactured constructional unit and then partially fills the interior space of the vehicle door.

In the case of this known door module, the bearing bracket of the door outside handle is not arranged on the unit carrier. The manner in which the unit carrier specifically has to be constructed so that it does not hinder the movement of the window panes, in the case of vehicle doors having window panes which can be lowered, cannot be gathered from this publication either.

The invention is based on the object of specifying a door module of the type mentioned at the beginning, in particular for vehicle doors having a window pane which can be lowered, the said door module, in addition to the door lock, also comprising the bearing bracket for a door outside handle.

According to the invention, this object is achieved by the features of Claim 1. Further, particularly advantageous refinements of the invention are disclosed by the subclaims.

The invention is essentially based on the concept of not fastening the door lock and the bearing bracket of the door outside handle to the unit carrier of the door module directly, but to an essentially U-shaped console which is arranged on the unit carrier and whose first limb is connected fixedly to the unit carrier, whose second limb is connected to the bearing bracket of the door outside handle, and whose end side which connects the two limbs is connected to the door lock, the distance between the two limbs of the console being selected in such a manner that the window pane of the vehicle door can be guided through between them.

The console is advantageously a separate part which is first of all connected to the door lock and the bearing bracket and also to the mechanical and/or electrical connections between these two components, and only then is fastened as a submodule to the unit carrier. This ensures that this submodule can be prefabricated, and that the door lock and outside handle can be functionally tested, for example at the manufacturer of the locking system, and that the final installation of the entire door module takes place rapidly at the manufacturer of the vehicle door.

In order to ensure the tolerances required for installing the unit carrier into the vehicle door, it has proven advantageous if the door lock and/or the bearing bracket are fastened to the console via flexible retaining elements.

When an electric door lock is used, the cabling between the door lock and outside handle is advantageously accommodated on or in the console. If electrical leads are conducted from the lock or from the door outside handle to further electrical units, it has furthermore proven advantageous to connect the leads to a plug housing which is arranged on the console.

In one embodiment of the invention, the unit carrier is designed in such a manner that after it is installed it forms the inner wall of the vehicle door which is also covered over with respect to the vehicle interior in a manner known per se by means of an inner covering.

Further details and advantages of the invention emerge from the exemplary embodiment which is explained below with reference to figures, in which:
- Fig. 1: shows a perspective view of a door module according to the invention having a console which holds the door lock and the bearing bracket of a door handle;
- Fig. 2: shows an enlarged perspective view of the console illustrated in Fig. 1, together with the door lock and door outside handle, and

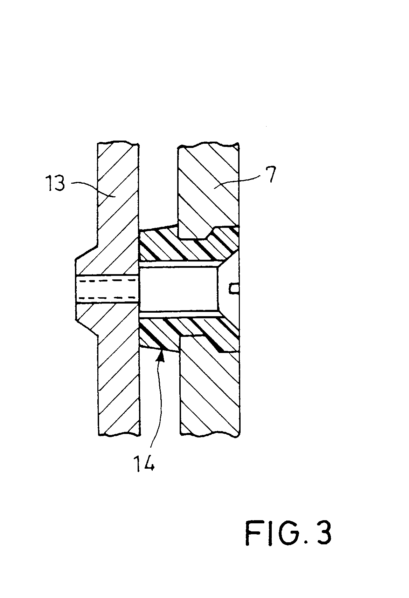

- Fig. 3: shows an enlarged illustration of the region denoted in Fig. 2 by II.

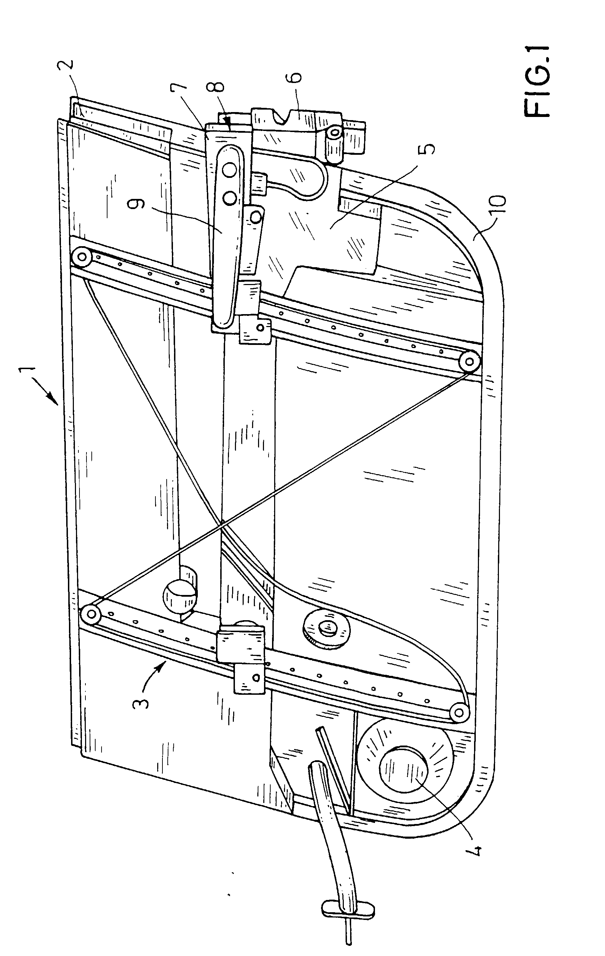

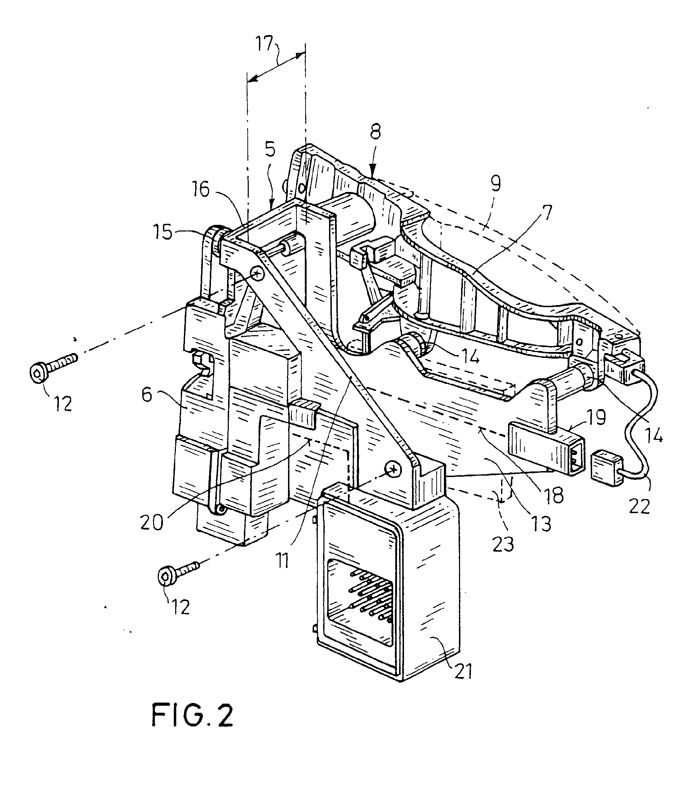

In Fig. 1, 1 denotes a door module for a side door of a motor vehicle, which door module comprises a unit carrier 2 to which, among other things, a window-opening mechanism 3, a loudspeaker 4 and a console 5 having an electric door lock 6 and bearing bracket 7 of a door outside handle 8 (Fig. 2) are fastened.

The handle part 9 of the door outside handle 8 is likewise illustrated in Fig. 1 and 2, in order to be able to carry out a functional test of the preassembled console 5. Customarily, only after the entire door module 1 has been fastened to the vehicle door frame is the handle part 9 attached, by being plugged from the outside through a corresponding opening in the outer panelling of the vehicle door into the bearing bracket 7 and being connected to the latter.

After it is fitted, the unit carrier 2 forms the inner wall of the vehicle door (not illustrated for reasons of clarity) and for this purpose is inserted from the inside of the door into a corresponding opening in the metal frame of a frame door (or of the inner plate designed in the form of a frame in the case of a punched door) and is fastened (for example, screwed) by its outer edge region 10 to the corresponding door frame. In addition, the door lock 6 is also screwed on the front side to the door frame and the bearing bracket 7 is screwed to the outer panelling of the vehicle door.

The console 5 (Fig. 2) has an essentially U-shaped design. While the first limb 11 of the console 5 is screwed fixedly to the unit carrier 2 by means of two screws 12, the bearing bracket 7 of the door outside handle 8 is connected to the second limb 13 of the console 5 via two flexible retaining elements 14. The electric door lock 6 is likewise fastened via two flexible retaining elements 15 to the end side 16, connecting the two limbs 11, 13, of the console 5.

The distance 17 between the two limbs of the console 5 is selected in such a manner that the window pane (not illustrated) of the vehicle door can be guided through between them.

Some of the electric leads 18 provided between the door lock and the door handle are embedded fixedly in the second limb 13 of the console 5 (for example, are laid and encapsulated as a punched grid) and end at a first plug housing 19. From here they are guided via a flexible cable 22, which can be fastened to the plug housing 19, to the handle part 9. The further electric leads 20, which are connected to the electric door lock 6 (for example for actuating a central locking system or for connection to a sensor scanning the position of the forked latch) are embedded in the first limb 11 of the console 5 and end at a second plug housing 21 connected fixedly to the console.

The second plug housing 21 protrudes through a recess in the unit carrier 2 into the gap formed by the unit carrier 2 and an inner covering (not illustrated) of the vehicle door. This measure makes it largely possible to dispense with laying cables in the wet area (interior of the vehicle door) and therefore also with electric interfaces in this area.

Of course, the invention is not restricted to the exemplary embodiment described above. For example, the console does not absolutely have to be a separate part. On the contrary, it is also conceivable for the console to form an integrated part of the unit carrier and for the door lock and also the bearing bracket together with the further functional parts in the region of the console to be fastened to the unit carrier.

In addition, the length of the two limbs of the console does not have to be identical. Particularly if the door outside handle - and therefore also the bearing bracket - are located in the central region of the door, the second limb of the console is of substantially longer design than the first limb of the console, which limb is connected to the unit carrier.

It has furthermore proven advantageous if, in the case of motor vehicles in which an electronic evaluating and control device is provided in the handle region for the purpose of electronic identification of the person authorized to open the door (passive or keyless-entry system), this evaluating and control device is likewise arranged on the console 5. In this case, one half of the housing of the evaluating and control device can be integrated in the console (which consists, for example, of plastic), so that, among other things, the number of constructional units is smaller than in the case of known arrangements. In addition, an additional fastening of the evaluating and control device, for example to the bearing bracket of the door outside handle, is omitted, and the laying of cables can be carried out very simply.

In Fig. 2, a corresponding evaluating and control device is illustrated by dashed lines and is provided with the reference number 23. The electric leads to the sensors arranged in the door outside handle 8 are accommodated in the cable 22. The evaluating and control device 23 and an external electronic central unit are connected via the second plug housing 21.

### List of reference numbers

- 1: Door module
- 2: Unit carrier
- 3: Window-opening mechanism
- 4: Loudspeaker
- 5: Console
- 6: Door lock
- 7: Bearing bracket
- 8: Door outside handle
- 9: Handle part
- 10: Edge region (unit carrier)
- 11: First limb (console)
- 12: Screw
- 13: Second limb (console)
- 14: Retaining element
- 15: Retaining element
- 16: End side
- 17: Distance
- 18: Electric lead
- 19: First plug housing
- 20: Electric lead
- 21: Second plug housing, plug housing
- 22: Cable
- 23: Evaluating and control device

## Claims

1. Door module for a vehicle door having a window pane, door lock (6) and door outside handle (8), the door module (1) comprising a unit carrier (2) and a plurality of functional elements (3, 4, 6, 7) arranged on the unit carrier (2), having the following features:
a) a console (5), to which both the door lock (6) and the bearing bracket (7) of the door outside handle (8) are fastened, is arranged on the unit carrier (2) ;
b) the console (5) has an essentially U-shaped design and is connected via its first limb (11) to the unit carrier (2);
c) the bearing bracket (7) of the door outside handle (8) is fastened to the second limb (13) of the console (5), and the door lock (6) is fastened to the end side (16) connecting the two limbs (11, 13), and
d) the distance (17) between the two limbs (11, 13) of the console (5) is selected in such a manner that the window pane of the vehicle door can be guided through between them.

2. Door module according to Claim 1, characterized in that after installation of the door lock (6) and bearing bracket (7) the console (5) can be fastened as a modular unit to the unit carrier (2).

3. Door module according to Claim 1 or 2, characterized in that the unit carrier (2) of the door module (1) forms the inner wall of the vehicle door and can be inserted as a preassembled unit in a frame-shaped cutout in the vehicle door.

4. Door module according to claim 3, characterized in that the door module (1) is designed such that it can be inserted into the door frame from the inside of the door.

5. Door module according to one of Claims 1 to 4, characterized in that the door lock (6) and/or the bearing bracket (7) are fastened to the console (5) via flexible retaining elements (14, 15).

6. Door module according to one of Claims 1 to 5, characterized in that when an electric door lock is used, at least some of the electric leads (18) which are provided between the door lock (6) and the door outside handle (8) are arranged fixedly on the console (5) or are embedded in the console (5).

7. Door module according to one of Claims 1 to 6, characterized in that when an electric door lock (6) is used, the electrical leads (20) which are located between the door lock (6) and the door outside handle (8) and further electrical units within the vehicle door, are arranged fixedly on the console (5) or are embedded into the console (5), and at least some of the electric leads (20), on their side which faces away from the door lock (6) and/or door outside handle (8), are connected to a plug housing (21) arranged on the console (5) .

8. Door module according to Claim 7, characterized in that the plug housing (21) is arranged on the first limb (11) of the console (5) in such a manner that it reaches through a recess in the unit carrier (2) into the gap formed by the unit carrier (2) and an inner covering of the vehicle door.

9. Door module according to one of Claims 1 to 7, characterized in that an electronic evaluating and control device (23) for evaluating the sensor signals of corresponding sensors located on the door outside handle (8) is arranged on the console (5).
